# EUROPÄISCHE PATENTSCHRIFT

(11) **EP 3 129 243 B1**
(45) Veröffentlichungstag und Bekanntmachung des Hinweises auf die Patenterteilung: **30.08.2017**
(21) Anmeldenummer: 15738838.0
(22) Anmeldetag: 15.07.2015
(51) Int. Cl.: B60C 23/04

(54) **REIFENDRUCKÜBERWACHUNGSEINHEIT MIT EINEM ZWEIKOMPONENTENGEHÄUSE**
TIRE PRESSURE MONITORING UNIT HAVING A TWO-COMPONENT HOUSING
UNITÉ DE SURVEILLANCE DE LA PRESSION D'UN PNEUMATIQUE COMPRENANT UN BOÎTIER À DEUX COMPOSANTS

(30) Priorität: 14.08.2014 DE 102014011949
(43) Veröffentlichungstag der Anmeldung: 15.02.2017
(73) Patentinhaber: Huf Hülsbeck & Fürst GmbH & Co. KG, 42551 Velbert (DE)
(72) Erfinder: GORENZWEIG, Igor, 42109 Wuppertal (DE); MÖNIG, Stefan, 58332 Schwelm (DE)
(74) Vertreter: Patentanwaltskanzlei Methling
(86) Internationale Anmeldenummer: PCT/EP2015/001448
(87) Internationale Veröffentlichungsnummer: WO 2016/023607

(56) Entgegenhaltungen:
- EP-A1- 1 510 370
- EP-A1- 1 939 017
- GB-A- 2 501 124
- US-A- 5 540 092

## Beschreibung

Die Erfindung betrifft eine Reifendrucküberwachungseinheit zur Anordnung innerhalb eines Kraftfahrzeugreifens zur Überwachung des Reifenfülldrucks, wobei die Reifendrucküberwachungseinheit ein Gehäuse aufweist, in welchem Elektronikbauteile und zumindest ein Drucksensor angeordnet sind.

Ferner betrifft die Erfindung ein Verfahren zur Herstellung einer Reifendrucküberwachungseinheit zur Anordnung innerhalb eines Kraftfahrzeugreifens zur Erfassung des Reifenfülldrucks, die ein Gehäuse aufweist, in welchem Elektronikbauteile und zumindest ein Drucksensor angeordnet sind.

Derartige Reifendrucküberwachungseinheiten zur Überwachung des Reifenfülldrucks eines Kraftfahrzeuges sind bekannt. Im Betrieb übermitteln diese Reifenüberwachungsdruckeinheiten einer Zentraleinheit des Kraftfahrzeuges drahtlos Informationen über den Reifenfülldruck des Kraftfahrzeugreifens. Zusammen mit der Zentraleinheit bilden die Reifendrucküberwachungseinheiten sämtlicher Reifen des Kraftfahrzeuges ein Reifendrucküberwachungssystem Diese Reifendrucküberwachungseinheiten zur Überwachung des Reifenfülldrucks werden innerhalb des Reifens an die Felge angelehnt bzw. gedrückt.

Aus der GB 2 501 124 A ist eine Reifendrucküberwachungseinheit zur Anordnung innerhalb eines Kraftfahrzeugreifens zur Erfassung des Reifenfülldrucks bekannt, wobei die Reifendrucküberwachungseinheit ein Gehäuse aufweist, in welchem Elektronikbauteile und zumindest ein Drucksensor angeordnet sind, wobei das Gehäuse einen Lufteinlass aufweist, über den der Drucksensor mit dem Reifenfülldruck beaufschlagt ist, wobei das Gehäuse eine Gehäuseunterschale und eine Gehäuseoberschale bildet und sich eine Dichtung zwischen dem Lufteinlass und dem Drucksensor befindet.

Aus der US 5 540 092 A ist eine Reifendrucküberwachungseinheit zur Anordnung innerhalb eines Kraftfahrzeugreifens zur Erfassung des Reifenfülldrucks bekannt, wobei ein Transponder zur Übertragung des erfassten Reifenfülldrucks mit einem minimierten Energieverbrauch angeordnet ist, um die Lebensdauer der Batterie zu erhöhen.

Aus den Dokumenten EP 1 510 370 A1 und EP 1 939 017 A1 sind ebenfalls Reifendrucküberwachungseinheiten zur Anordnung innerhalb eines Kraftfahrzeugreifens zur Erfassung des Reifenfülldrucks bekannt, wobei die Reifendrucküberwachungseinheiten jeweils ein Gehäuse aufweisen, welches aus einer Gehäuseunterschale und einer Gehäuseoberschale gebildet ist

Um die innerhalb des Gehäuses der Reifendrucküberwachungseinheit angeordneten Elektronikbauteile gegen Feuchtigkeit zu schützen ist es bekannt, die Elektronikbauteile in eine Gehäuseunterschale der Reifendrucküberwachungseinheit einzusetzen und sodann die Gehäuseunterschale mit einer aushärtenden Vergussmasse auszugießen, sodass die Elektronikbauteile vollständig von der Vergussmasse umschlossen und durch diese geschützt werden.

Nachteilig dabei ist es jedoch, dadurch dass das Gehäuse einer solchen Reifendrucküberwachungseinheit mit einer aushärtenden Vergussmasse vollständig ausgegossen wird, dass die Reifendrucküberwachungseinheit eine große Masse aufweist, woraus bei hohen Fahrgeschwindigkeiten des Kraftfahrzeuges große Zentrifugalkräfte auftreten und rapide ansteigen, da derartige Reifendrucküberwachungseinheiten innerhalb des Kraftfahrzeugreifens an der Felge angeordnet werden. Im schlimmsten Fall können die auftretenden Zentrifugalkräfte dazu führen, dass sich die Reifendrucküberwachungseinheit von der Felge löst und beschädigt wird und ein an der Reifendrucküberwachungseinheit befestigtes Ventil sich löst und bricht.

Die Aufgabe der Erfindung ist es, eine Reifendrucküberwachungseinheit der eingangs genannten Art derart weiterzubilden, dass diese bei einer kleineren Gesamtmasse der Reifendrucküberwachungseinheit einen guten Schutz der Elektronikbauteile innerhalb des Gehäuses vor Feuchtigkeit bietet. Eine weitere Aufgabe der Erfindung ist es, ein Verfahren zur Herstellung einer entsprechenden Reifendrucküberwachungseinheit anzugeben.

Diese Aufgabe wird erfindungsgemäß durch eine Reifendrucküberwachungseinheit gemäß Anspruch 1 sowie ein Verfahren zur Herstellung einer Reifendrucküberwachungseinheit gemäß Anspruch 12 gelöst. Vorteilhafte Weiterbildungen der Erfindung sind in den jeweiligen abhängigen Ansprüchen angegeben.

Besonders vorteilhaft bei der Reifendrucküberwachungseinheit zur Anordnung innerhalb eines Kraftfahrzeugreifens zur Erfassung des Reifenfülldrucks, wobei die Reifendrucküberwachungseinheit ein Gehäuse aufweist, in welchem Elektronikbauteile und zumindest ein Drucksensor angeordnet sind, wobei das Gehäuse einen Lufteinlass aufweist, über den Drucksensor mit dem Reifenfülldruck beaufschlagt ist, ist es, dass das Gehäuse als ein Mehrkomponentenkunststoffspritzgussteil, insbesondere als ein Zweikomponentenkunststoffspritzgussteil ausgebildet ist, wobei eine erste Komponente eine Gehäuseunterschale und eine Gehäuseoberschale bildet und wobei eine zweite Komponente eine Dichtung zwischen dem Lufteinlass und dem Drucksensor bildet.

Mit der durch die zweite Komponente gebildeten Dichtung erfolgt somit eine Abdichtung des Gehäuseinnenraumes gegen den Lufteinlass, der erforderlich ist, um den Drucksensor mit dem Reifenfülldruck zu beaufschlagen. Der innerhalb des Gehäuses angeordnete Drucksensor wird über den Lufteinlass mit dem Reifenfülldruck beaufschlagt.

Bei einer Anordnung der zweiten Komponente des als Zweikomponentenkunststoffspritzgussteil ausgebildeten Gehäuses derart, dass diese zweite Komponente eine Dichtung des Lufteinlass bildet, wird eine zuverlässige Abdichtung des Gehäuseinnenraumes gegenüber dem Lufteinlass und damit gegenüber der Umgebung geschaffen. Dadurch sind die in dem Gehäuse angeordneten Elektronikbauteile zuverlässig gegen Feuchtigkeit geschützt.

In einer bevorzugten Ausführungsform bildet die zweite Komponente eine Dichtung des Gehäuses. Hierdurch erfolgt eine Abdichtung des Gehäuses, d.h. insbesondere eine Abdichtung von Gehäuseunterschale und Gehäuseoberschale an der Kontaktlinie der beiden Gehäuseschalen.

Vorzugsweise bildet die zweite Komponente Auflagen und/oder Montagebereiche für die Elektronikbauteile innerhalb des Gehäuses.

Die zweite Komponente kann somit verschiedene Funktionen alternativ oder kumulativ übernehmen. Zunächst bildet die zweite Komponente eine Dichtung des Lufteinlasses in dem Gehäuse, welcher dazu dient, den Drucksensor mit dem Reifenfülldruck zu beaufschlagen.

Alternativ oder kumulativ kann die zweite Komponente eine Dichtung zwischen der Gehäuseunterschale und der Gehäuseoberschale und/oder Auflagen und/oder Montagebereiche für die Elektronikbauteile innerhalb des Gehäuses bilden.

Die zweite, weichere Komponente kann somit neben der Funktion einer Dichtung gleichzeitig dem Toleranzausgleich bei der Montage von Gehäuseunterschale und Gehäuseoberschale dienen und bildet ferner einen Vibrationsschutz und eine Stoßdämpfung, wodurch der in der Reifendrucküberwachungseinheit angeordnete Sensor und die Elektronikbauteile zuverlässig geschützt werden.

Dabei wird bevorzugt die zweite Komponente direkt an die erste Komponente angespritzt. Erfindungsgemäß handelt es sich somit bei dem Gehäuse der Reifendrucküberwachungseinheit besonders bevorzugt um ein Zweikomponentenkunststoffspritzgussteil, jedoch ist die Erfindung nicht hierauf beschränkt und besteht die Möglichkeit, eine oder mehrere weitere Komponenten in einem Mehrkomponentenspritzgussverfahren einzusetzen, um eine weitere, andere Werkstoffeigenschaft und/oder eine andere Kunststofffarbe einzusetzen.

Durch Anwendung eines Mehrkomponentenspritzgiessverfahrens, insbesondere eines Zweikomponentenspritzgiessverfahrens ist es möglich, zwei verschiedene Kunststoffkomponenten, die eine stoffschlüssige Verbindung an der Grenzfläche eingehen, zu kombinieren, sodass unterschiedliche, aber zugleich verträgliche Materialien aneinander gespritzt werden können, um unterschiedliche Werkstoffeigenschaften an einem Bauteil zu kombinieren. Vorliegend ist die zweite Komponente, welche eine Dichtung und insbesondere Auflagebereiche für die Elektronikbauteile innerhalb des Gehäuses bildet, im ausgehärteten Zustand leichter elastisch verformbar, als die erste Komponente, die das Gehäuse bildet. Dementsprechend wird beispielsweise bei Fertigung der Gehäuseunterschale unmittelbar an die erste Komponente eine die Dichtung bildende zweite Komponente angespritzt, so dass nach der Montage der Gehäuseoberschale die wiederum aus der ersten Komponente gebildet ist, durch die vorhandene Dichtung eine Abdichtung des Gehäuseinnenraumes gegenüber der Umgebung und somit ein Schutz der in dem Gehäuse angeordneten Elektronikbauteile gegen Feuchtigkeit geschaffen wird. Die Gehäuseunterschale und die Gehäuseoberschale sind somit aus einer gegenüber der zweiten Komponente härteren Kunststoffkomponente gebildet, während die zweite Komponente gegenüber der ersten Komponente die weichere, elastisch verformbare Komponente darstellt und sich dadurch gut als Dichtung und/oder Vibrationen dämpfende Auflage für die Elektronikbauteile innerhalb des Gehäuses eignet.

Die zweite Komponente dient somit sowohl der Abdichtung des Gehäuseinnenraumes gegenüber der Umgebung, als auch insbesondere bei entsprechender Gestaltung der Reifendrucküberwachungseinheit dem Toleranzausgleich sowie ferner der Vibrationsdämpfung, da die zweite Komponente durch einen elastisch verformbaren Kunststoff gebildet ist.

Die erste Komponente, welche die Gehäuseunterschale und die Gehäuseoberschale bildet, kann aus thermoplastischem Polymeren, wie beispielsweise Polybutylenterephthalat, insbesondere auch aus glasfaserverstärktem Polybutylenterephthalat, Polyamid oder Polypropylen gebildet sein.

Die zweite Komponente, welche eine Dichtung und/oder Auflagebereiche für die Elektronikbauteile bildet, kann durch einen thermoplastischen Elastomer wie beilspielsweise Styrol-Blockcopolymere, insbesondere SEPS, oder beispielsweise thermoplastische Copolyamid, gebildet sein.

Die die Dichtung und/oder Auflagebereiche bildende zweite Komponente kann entweder unmittelbar an die aus der ersten Komponente gebildeten Gehäuseunterschale angespritzt sein oder unmittelbar an die aus der ersten Komponente gebildete Gehäuseoberschale angespritzt sein oder sowohl an die durch die erste Komponente gebildete Gehäuseunterschale als auch an die durch die erste Komponente gebildete Gehäuseoberschale angespritzt sein.

Erfindungsgemäß ist die aus der zweiten Komponente gebildete Dichtung der Gestalt ausgeführt, dass nach dem Fügen von Gehäuseunterschale und Gehäuseoberschale zu dem Gehäuse der Reifendrucküberwachungseinheit die Reifendrucküberwachungseinheit und der eingeschlossene Einbauraum mit den darin angeordneten Elektronikbauteilen durch die durch die zweite Komponente gebildete Dichtung gegen die Umgebung abgedichtet ist. Hierdurch werden die innerhalb des Gehäuses angeordneten Elektronikbauteile gegenüber der Umgebung vor Feuchtigkeit geschützt.

Alternativ oder kumulativ zu einer aus der zweiten Komponente gebildeten als Dichtung des Lufteinlasses sowie gegebenenfalls einer Dichtung zwischen den Gehäuseschalen kann die zweite Komponente ferner Auflagebereiche und/oder Montagebereiche für die Elektronikbauteile innerhalb des Gehäuses bilden.

Da die zweite Komponente des Zweikomponentenkunststoffspritzgussteils gegenüber der ersten Komponente eine leichtere elastische Verformbarkeit aufweist, bildet diese zweite Komponente somit gleichzeitig eine Vibrationsdämpfende Auflage für die Elektronikbauteile innerhalb des Gehäuses. Durch diese Vibrationsdämpfung durch die zweite Komponente innerhalb des als Zweikomponentenkunststoffspritzgussteils ausgebildeten Gehäuses der Reifendrucküberwachungseinheit werden somit Beschädigungen der Elektronikbauteile wie beispielsweise einer Leiterplatte durch Vibrationen, die während des Fahrbetriebes des Kraftfahrzeuges auftreten können, zuverlässig verhindert.

Die innerhalb des Gehäuses angeordneten Elektronikbauteile der Reifendrucküberwachungseinheit können dabei insbesondere eine Energiequelle wie eine Batterie, eine Mess- und Sendeelektronik zur Verarbeitung der mittels des Drucksensors erfassten Reifenfülldruckwerte sowie eine Antenne zur Funkübermittlung an eine Zentraleinheit eines Reifendrucküberwachungssystems umfassen. Mess- und Sendeelektronik können wiederum auf einer Leiterplatte angeordnet sein, die in das Gehäuse der Reifendrucküberwachungseinheit eingebaut wird.

Dadurch, dass das Gehäuse als Mehrkomponentenkunststoffspritzgussteil, insbesondere als ein Zweikomponentenkunststoffspritzgussteil ausgebildet ist, welches eine Dichtung des Lufteinlasses und insbesondere eine Dichtung zwischen Gehäuseunterschale und Gehäuseoberschale und/oder Auflagebereiche für die Elektronikbauteile aufweist, ist es nach dem Einsetzen der Elektronikbauteile und des zumindest einen Drucksensors in das Gehäuse nicht mehr erforderlich, die Elektronikbauteile mit einer Vergussmasse zu vergießen. Dadurch weist die erfindungsgemäße Reifendrucküberwachungseinheit eine geringere Masse auf. Hieraus resultieren bei Anordnung der Reifendrucküberwachungseinheit innerhalb eines Reifens auf der Kraftfahrzeugfelge geringere Zentrifugalkräfte auch bei hohen Fahrgeschwindigkeiten des Kraftfahrzeuges. Hierdurch wird die Neigung des Sensors, sich aufgrund großer Zentrifugalkräfte und/oder auftretender Vibrationen von der Felge abzulösen vermindert. Besonders vorteilhaft ist es bei einer Kombination von Reifendrucküberwachungseinheit mit einem durch eine entsprechende Bohrung in der Felge zu führenden Ventilkörper mit dem Befüllventil, dass der Schwerpunkt der Gesamtanordnung zur Außenseite des Rades verlagert wird, wodurch die Neigung der Reifendrucküberwachungseinheit, sich von der Felge zu lösen, weiter reduziert wird.

Vorzugsweise bilden die erste Komponente und/oder die zweite Komponente des als Zweikomponentenkunststoffspritzgussteils ausgebildeten Gehäuses der Reifendrucküberwachungseinheit innerhalb des Gehäuses Positioniervorsprünge für die Elektronikbauteile.

Bei diesen Positioniervorsprüngen kann es sich um Stifte und/oder Kanten und/oder Anlageschultern als Positionierhilfe und Montagehilfe für die Elektronikbauteile handeln.

Mittels derartiger Positionierhilfen und Montagehilfen wird es sehr erleichtert, die Elektronikbauteile in die hierfür vorgesehenen Positionen innerhalb des Gehäuses zu bringen und in das Gehäuse einzusetzen.

Vorzugsweise liegen Elektronikbauteile formschlüssig und/oder kraftschlüssig in der Gehäuseunterschale und/oder in der Gehäuseoberschale ein.

Durch die Anordnung entsprechender Aufnahmebereiche innerhalb der Gehäuseunterschale und/oder innerhalb der Gehäuseoberschale durch die erste Komponente und/oder durch die zweite Komponente des als Zweikomponentenkunststoffspritzgussteil ausgebildeten Gehäuses, in welchen die Elektronikbauteile formschlüssig und/oder kraftschlüssig einliegen, wird das jeweilige Elektronikbauteil innerhalb des Gehäuses fixiert und ferner wird die Endmontage der Reifendrucküberwachungseinheit erleichtert, wenn bereits vor der Fertigmontage des Gehäuses durch Zusammenfügen von Gehäuseunterschale und Gehäuseoberschale die Elektronikbauteile in einem der beiden Bauteile des Gehäuses fixiert und hierdurch unverlierbar angeordnet sind.

Vorzugsweise sind die Elektronikbauteile derart in der Gehäuseunterschale und/oder in der Gehäuseoberschale angeordnet und werden bei dem Zusammenbau des Gehäuses gegen elastische Auflagebereiche an dem Gehäusegegenstück gepresst, so dass die Elektronikbauteile bei montiertem Gehäuse unter Vorspannung der elastischen Auflagebereiche in dem Gehäuse fixiert sind.

Durch derartige elastische Auflagebereiche an dem Gehäusegegenstück werden zum einen Vibrationen gedämpft und hierdurch die Elektronikbauteile geschützt. Ferner wird durch die elastische Verformung der Auflagebereiche an dem Gehäusegegenstück das Elektronikbauteil innerhalb des Gehäuses fixiert.

Vorzugsweise sind zwischen Gehäuseunterschale und den Elektronikbauteilen und/oder zwischen Gehäuseoberschale und den Elektronikbauteilen eine oder mehrere Schaumstoffeinlagen angeordnet.

Durch derartige Schaumstoffeinlagen werden die Elektronikbauteile innerhalb des Gehäuses zusätzlich gegen Vibrationen geschützt. Hierdurch wird einer Beschädigung der Elektronikbauteile durch Vibrationen zuverlässig entgegengewirkt.

Vorzugsweise werden nach dem Einsetzen der Elektronikbauteile in die Gehäuseunterschale und/oder in die Gehäuseoberschale durch die erste oder zweite Komponente gebildete Überstände heißgeprägt und hierdurch die Elektronikbauteile in dem Gehäuse fixiert.

Insbesondere können somit Positioniervorsprünge wie Stifte und/oder Kanten und/oder Anlageschultern zur Positionierung und Aufnahme der Elektronikbauteile derart ausgestaltet sein, dass diese im Rohzustand nach dem Einsetzen der Elektronikbauteile Überstände bilden, die mittels eines Werkzeuges heißgeprägt werden können, so dass nach dem Heißprägen diese Materialbereiche die Elektronikbauteile übergreifende Fixierungen bilden und die Elektronikbauteile innerhalb des Gehäuses sichern.

Vorzugsweise wird die Gehäuseoberschale an der Gehäuseunterschale in entsprechende Aufnahmen eingerastet. Alternativ oder kumulativ kann die Gehäuseoberschale mit der Gehäuseunterschale verschraubt sein.

Zur Montage des Gehäuses ist es somit möglich die Gehäuseoberschale an der Gehäuseunterschale einzurasten und/oder zu verschrauben. Durch die durch die zweite Komponente gebildete Dichtung zwischen Gehäuseoberschale und Gehäuseunterschale ist der Gehäuseinnenraum zuverlässig gegenüber der Umgebung abgedichtet und die in dem Gehäuse angeordnete Elektronik gegen Feuchtigkeit geschützt.

In einer weiteren besonders bevorzugten Ausführungsform ist die Gehäuseoberschale mit der Gehäuseunterschale stoffschlüssig verbunden und/oder verklebt. Insbesondere können die Gehäuseoberschale und die Gehäuseunterschale miteinander laserverschweißt und/oder ultraschallverschweißt sein.

Durch ein derartiges Verschweißen und/oder Verkleben der Gehäuseoberschale mit der Gehäuseunterschale wird ebenfalls eine zuverlässige Abdichtung des Gehäuseinnenraumes gegenüber der Umgebung geschaffen. In diesem Fall dient die zweite Komponente des als zwei Komponentenkunststoffspritzgussteils ausgebildeten Gehäuses vorzugsweise der Abdichtung des Lufteinlass durch welchen der Drucksensor mit dem Reifenfülldruck beaufschlagt ist, sowie als dämpfende Auflagen für die Elektronikbauteile innerhalb des Gehäuses.

Vorzugsweise wird durch die an die erste Komponente angespritzte zweite Komponente innerhalb des Gehäuses eine Druckausgleichsmembran gebildet.

Eine solche Druckausgleichsmembran, welche durch die zweite Komponente gebildet wird, dient dem Druckausgleich im Gehäuse bei Temperaturschwankungen und entsprechend auftretenden Temperaturdehnungen. Dementsprechend dient eine solche Druckausgleichsmembran gleichzeitig dem Schutz der innerhalb des Gehäuses angeordneten Elektronikbauteile.

Eine solche Druckausgleichsmembran kann beispielsweise durch die zweite, weichere Komponente in Form eines Faltenbalgs gebildet sein.

Die zweite, elastische Komponente kann somit eine oder mehrere Funktionen erfüllen, wie beispielsweise als Dichtung des Gehäuses und insbesondere des Lufteinlasses zur Beaufschlagung des Drucksensors mit dem Reifenfülldruck, als dämpfende Abstützung und/oder als Montage- und Auflagebereich für die Elektronikbauteile innerhalb des Gehäuses, als Stoßdämpfung und Vibrationsschutz für die Elektronikbauteile, als Druckausgleichsmembran innerhalb des Gehäuses sowie ferner als Toleranzausgleich bei der Montage von Gehäuseunterschale und Gehäuseoberschale.

Vorzugsweise weist die Reifendrucküberwachungseinheit ein Ventilkörper mit einem Ventil zum Befüllen des Reifens auf. Insbesondere können das Gehäuse der Reifendrucküberwachungseinheit und der Ventilkörper miteinander verschraubt sein. Hierzu weist das Gehäuse der Reifendrucküberwachungseinheit vorzugsweise einen entsprechenden Montagebereich zur Befestigung eines Ventilkörpers mittels einer Verschraubung an dem Gehäuse der Reifendrucküberwachungseinheit auf.

Hierdurch kann eine kompakte Baueinheit geschaffen werden, die gleichzeitig das Gehäuse mit den darin angeordneten Elektronikbauteilen und zumindest einem Drucksensor aufweist und gleichzeitig einen Ventilkörper mit einem Ventil zum Befüllen des Reifens. Der Ventilkörper wird bei der Montage der Baugruppe durch eine entsprechende Bohrung der Kraftfahrzeugfelge von innen nach außen geführt, so dass die Reifendrucküberwachungseinheit mit dem Gehäuse innerhalb des montierten Kraftfahrzeugreifens auf der Felge verbleibt.

Besonders vorteilhaft bei dem Verfahren zur Herstellung einer Reifendrucküberwachungseinheit zur Anordnung innerhalb eines Kraftfahrzeugreifens zur Erfassung des Reifenfülldrucks, die ein Gehäuse aufweist, in welchem Elektronikbauteile und zumindest ein Drucksensor angeordnet sind, ist es, dass das Gehäuse durch ein Mehrkomponentenkunststoffspritzgießen, insbesondere ein Zweikomponentenkunststoffspritzgießen hergestellt ist, wobei eine erste Komponente eine Gehäuseunterschale und eine Gehäuseoberschale bildet und eine zweite Komponente eine Dichtung und/oder Auflagebereiche für die Elektronikbauteile innerhalb des Gehäuses bildet.

Die zweite Komponente kann bei dem Verfahren zur Herstellung der Reifendrucküberwachungseinheit dabei direkt an die die Gehäuseunterschale bildende erste Komponente angespritzt sein. Alternativ oder kumulativ kann die die Dichtung und/oder Auflagebereiche für die Elektronikbauteile innerhalb des Gehäuses bildende zweite Komponente während des Herstellungsprozesses unmittelbar an die die Gehäuseoberschale bildende erste Komponente angespritzt sein. Durch die Anwendung des Mehrkomponentenspritzgießverfahrens werden zwei Kunststoffkomponenten mit unterschiedlichen Materialeigenschaften miteinander kombiniert, wobei die erste Komponente ein steifes Gehäuse bildet und die zweite Komponente eine elastische Dichtung des Gehäuses und/oder elastische und dämpfende Auflagebereiche für die Elektronikbauteile innerhalb des Gehäuses bildet. Hierdurch ist der Gehäuseinnenraum nach der Montage von Gehäuseoberschale und Gehäuseunterschale aneinander zuverlässig gegen die Umgebung abgedichtet sowie die in dem Gehäuse angeordneten Elektronikbauteile gegen Vibrationen geschützt,

Vorzugsweise wird dementsprechend die zweite Komponente an die erste Komponente angespritzt.

Ferner wird vorzugsweise nach dem Einsetzen der Elektronikbauteile in die Gehäuseunterschale und/oder Gehäuseoberschale durch die erste oder die zweite Komponente gebildete Überstände heißgeprägt und hierdurch die Elektronikbauteile in dem Gehäuse fixiert.

Mehrere Ausführungsbeispiele der Erfindung sind in den Figuren dargestellt und werden nachfolgend näher erläutert. Es zeigen:
- Fig. 1a: Eine erste Ausführungsform einer Reifendrucküberwachungseinheit mit geschlossenem Gehäuse;
- Fig. 1b: die Reifendrucküberwachungseinheit nach Fig. 1a ohne Gehäuseoberschale;
- Fig. 2: die Schnitte A - A und C - C nach Fig. 1a;
- Fig. 3: den Schnitt B - B nach Fig. 1 a in zwei Varianten;
- Fig. 4a: eine zweite Ausführungsform einer Reifendrucküberwachungseinheit mit geschlossenem Gehäuse;
- Fig. 4b: die Reifendrucküberwachungseinheit nach Fig. 4a ohne Gehäuseoberschale;
- Fig. 5: den Schnitt D - D nach Fig. 4a;
- Fig. 6: die Schnitte E - E und F - F nach Fig. 4a;
- Fig. 7: eine dritte Ausführungsform einer Reifendrucküberwachungseinheit ohne Gehäuseoberschale.

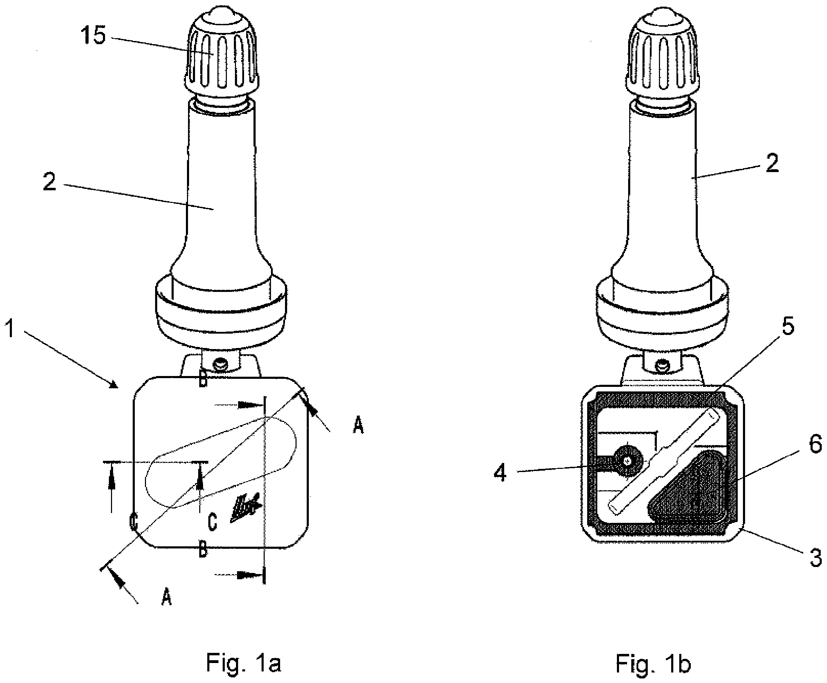

Fig. 1a zeigt eine Gesamtansicht einer vollständig montierten ersten Ausführungsform einer Reifendrucküberwachungseinheit 1 mit geschlossenem Gehäuse und daran anmontiertem Ventil 2. Das Ventil 2 weist an seinem äußeren Ende eine äußere Schutzkappe 15 auf Die Gesamtanordnung wird dergestalt montiert, dass das Ventil 2 von der Innenseite nach außen durch eine Bohrung in einer Felge eines Kraftfahrzeuges gesteckt wird. Dementsprechend verbleibt nach der Montage die Reifendrucküberwachungseinheit 1 auf der Felge innerhalb des schlauchlosen Kraftfahrzeugreifens zur Überwachung des Reifenfülldrucks.

Fig. 1b zeigt die Reifendrucküberwachungseinheit 1 nach Fig. 1 a ohne Gehäuseoberschale. Dementsprechend sichtbar in Fig. 1b in der Draufsicht ist die als Zweikomponentenkunststoffspritzgussteil ausgebildete Gehäuseunterschale 3, die aus der ersten Komponente hergestellt ist, mit daran angespritzter Dichtung 4 zur Abdichtung des Lufteinlasses, welcher dazu dient, den im montierten Zustand innerhalb des Gehäuses angeordneten Drucksensor mit dem Reifenfülldruck zu beaufschlagen. Die Dichtung 4 ist gebildet durch eine zweite Komponente, die unmittelbar an die erste Komponente angespritzt wird. Im ausgehärteten Zustand handelt es sich bei der zweiten Komponente um die weichere Kunststoffkomponente der beiden Komponenten der Gehäuseunterschale 3, so dass die Dichtung 4 elastisch verformbar ist.

Ferner ist durch die zweite Komponente eine umlaufende Dichtung 5, die gleichzeitig einen Toleranzausgleichsbereich zwischen den beiden Gehäuseschalen darstellt, gebildet.

Die Gehäuseschale 3 ist dementsprechend aus der härteren Komponente des Zweikomponentenkunststoffspritzgussteils gebildet, wohingegen die Dichtung 4 des Lufteinlasses und die im Kontaktbereich zwischen den beiden Gehäuseschalen umlaufende Dichtung 5 aus der weicheren Komponente des Zweikomponentenkunststoffspritzgussteils gebildet ist.

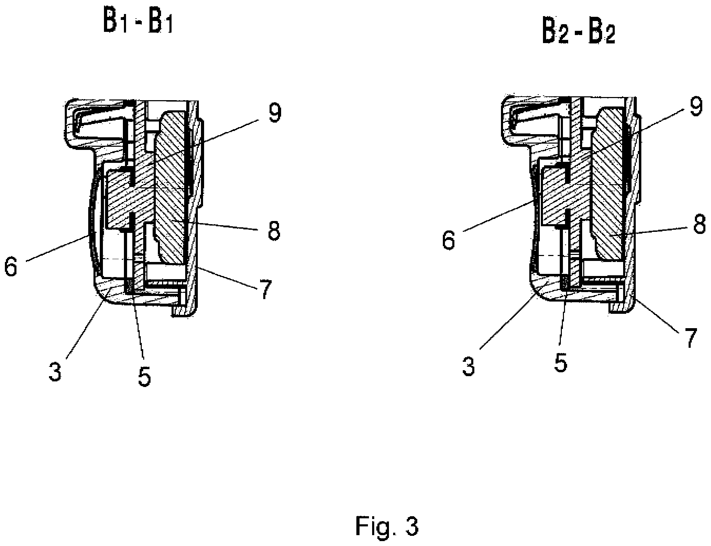

Ferner ist aus der zweiten Komponente eine Druckausgleichsmembran 6 gebildet, deren Funktion nachfolgend anhand der Fig. 3 näher erläutert wird.

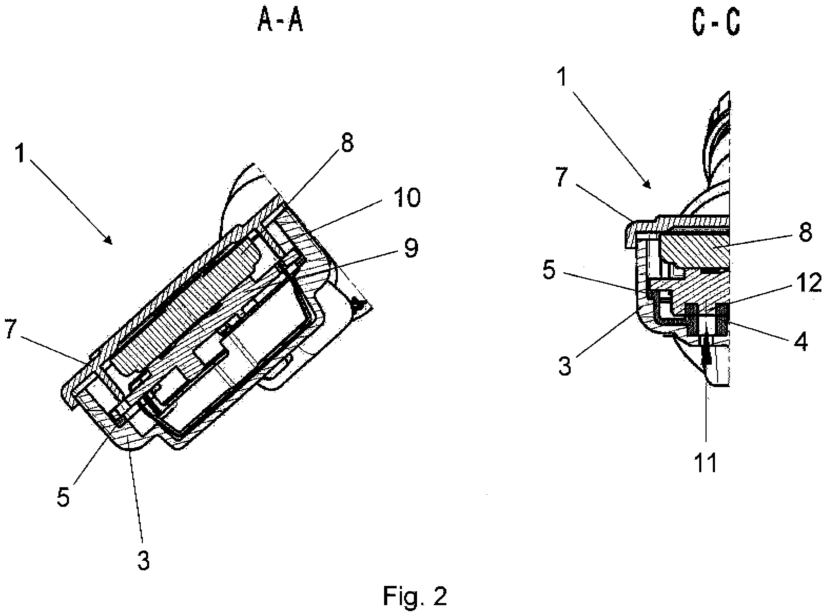

Fig. 2 zeigt die Schnitte A - A und C - C nach Fig. 1a. In Fig. 2 bei der Darstellung der Schnittansicht A - A ist sehr gut erkennbar der Sandwichaufbau der Reifendrucküberwachungseinheit 1, deren Gehäuse aus der Gehäuseunterschale 3 und der Gehäuseoberschale 7 gebildet ist. Innerhalb des Gehäuses sind angeordnet die Batterie 8, die der Energieversorgung der Reifendrucküberwachungseinheit 1 dient. Unterhalb der Batterie 8 ist die Leiterplatte 9 angeordnet, auf der die Elektronikbauteile zur Auswertung und Weiterverarbeitung der Signale des in dem Gehäuse angeordneten Drucksensors angeordnet sind. Ferner ist auf der Leiterplatte 9 eine Antenne zur Funkübermittlung der Druckdaten an eine zentrale Einheit eines Reifendrucküberwachungssystems in dem Kraftfahrzeug angeordnet.

Ferner ist in Fig. 2 im Schnitt A - A erkennbar die umlaufende Dichtung 5 zwischen Gehäuseunterschale 3 und Gehäuseoberschale 7 sowie eine an der Gehäuseoberschale 7 angeordnete Stützte 10. Die umlaufende Dichtung 5 an der Kontaktlinie zwischen Gehäuseunterschale 3 und Gehäuseoberschale 7 bildet bei diesem und den weiteren Ausführungsbeispielen gleichzeitig einen Dämpfer, durch den die innerhalb des Gehäuses angeordneten Elektronikbauteile geschützt werden.

Im rechten Teil der Fig. 2 ist dargestellt der Schnitt C - C nach Fig. 1a. In dieser Darstellung ist erkennbar der Lufteinlass 11, über welchen der innerhalb des Gehäuses angeordnete Drucksensor 12 mit dem Reifenfülldruck beaufschlagt wird. Ferner ist in der Schnittansicht C - C wiederum die Dichtung 4 des Lufteinlasses 11 erkennbar. Im oberen Teil ist erkennbar das Ventil 2 und zwischen der Gehäuseunterschale 3 und der Gehäuseoberschale 7 ist im Schnitt C - C die zwischen den Gehäuseschalen umlaufende Dichtung 5 erkennbar.

Die Dichtung 4 des Lufteinlasses 11 sowie die zwischen Gehäuseunterschale 3 und Gehäuseoberschale 7 umlaufende Dichtung 5 ist wie erläutert durch die zweite, weichere Komponente des Zweikomponentenspritzgussteils gebildet, wohingegen das Gehäuse 3 selbst durch die härtere Komponente des Zweikomponentenkunststoffspritzgusstells gebildet ist. Dabei sind die Dichtungsbereiche 4, 5 welche durch die zweite Komponente gebildet sind, unmittelbar an die Gehäuseunterschale 3 angespritzt.

Wie in Fig. 1b erkennbar wird durch die zweite weichere Komponente des Zweikomponentenspritzgussteils ferner die durch Druckausgleichsmembran 6 gebildet, deren Funktionsweise anhand Fig. 3 erkennbar ist. Fig. 3 zeigt den Schnitt B - B nach Fig. 1a in zwei verschiedenen Varianten mit einem auf der Außenseite herrschenden Unterdruck im Schnitt B1 - B1 und einem auf der Außenseite herrschenden Überdruck in der Darstellung des Schnittes B2 - B2.

Erkennbar in diesem Fall ist das Verhalten der Membran 6, die im Schnitt B1-B1 bei einem auf der Außenseite herrschenden Unterdruck nach außen gewölbt ist, wohingegen die Membran 6 gemäß des Schnittes B2 - B2 bei einem auf der Außenseite herrschenden Überdruck nach innen gewölbt ist.

Diese Druckausgleichsmembran 6 dient dem Ausgleich von Druckschwankungen, wie sie aufgrund von Temperaturänderungen auftreten. Bei hohen Fahrgeschwindigkeiten des Kraftfahrzeuges erhitzt sich aufgrund der Walkarbeit der Kraftfahrzeugreifen und damit die innerhalb des Reifens befindliche Luft, wodurch der Reifenfülldruck entsprechend ansteigt. Dementsprechend dient die aus der elastischen zweiten Komponente gebildete Membran 6 als Druckausgleichsmembran 6 der Reifendrucküberwachungseinheit 1. In den in Fig. 3 dargestellten Schnittansichten ist ferner wiederum die Sandwichbauweise der Reifendrucküberwachungseinheit mit der Batterie 8 und der bestückten Leiterplatte 9 erkennbar. Ferner erkennbar ist die zwischen den Gehäuseschalen 3, 7 umlaufende elastische Dichtung 5, die gleichzeitig dem Toleranzausgleich bei der Montage der Reifendrucküberwachungseinheit 1 dient.

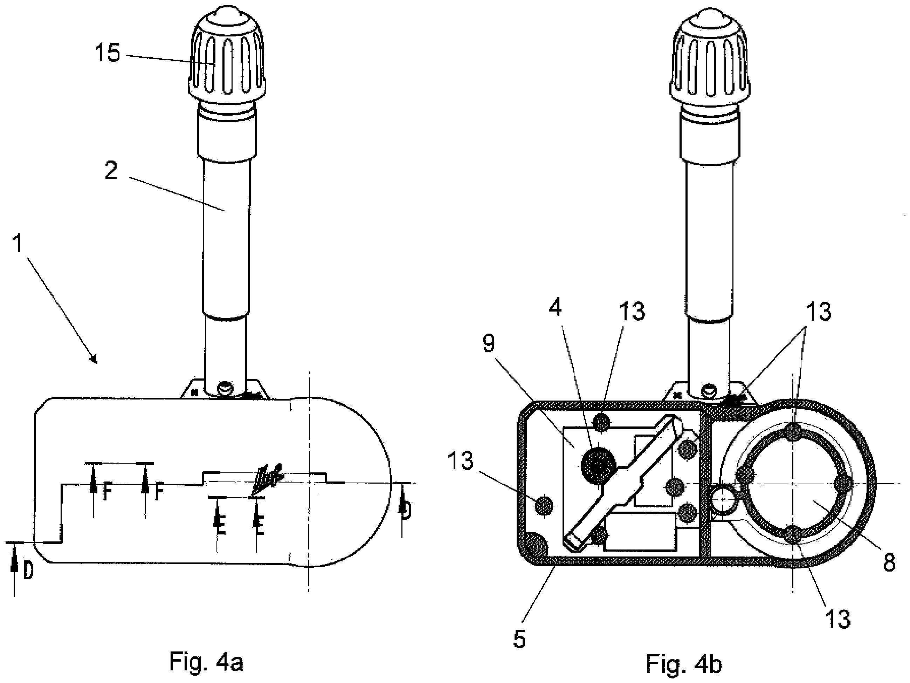

In den Figuren 4a und 4b ist eine zweite Ausführungsführung einer Reifendrucküberwachungseinheit 1 mit montiertem Ventil 2 dargestellt. Fig. 4a zeigt die vollstandig montierte Reifendrucküberwachungseinheit 1 mit Ventil 2 und Schutzkappe 3 des Ventils 2. Fig. 4b zeigt die Reifendrucküberwachungseinheit 1 nach Fig. 4a ohne Gehäuseoberschale.

In der Darstellung gemäß Fig. 4b ist wiederum die als Zweikomponentenspritzgussteil ausgebildete Gehäuseunterschale 3 erkennbar, deren Grundkörper aus der ersten härteren Komponente des Kunststoffspritzgussteils gebildet.

Unmittelbar daran angespritzt ist die zweite elastischere Komponente des Zweikomponentenkunststoffspritzgussteils, welche die Dichtung 4 des Lufteinlasses sowie ferner eine in den Kontaktbereichen zwischen den beiden Gehäuseschalen 3 und 7 verlaufende Dichtung 5 bildet, die gleichzeitig einen Dämpfer bildet.

Des Weiteren sind an die Gehäuseunterschale 3 angespritzt Positionierstifte 13, die einerseits der leichteren Positionierung und Montage der Batterie 8 und der bestückten Leiterplatte 9 dienen und gleichzeitig Dämpfungselemente zum Schutz der Leiterplatte 9 und der Batterie 8 darstellen. In dem in Fig. 4 dargestellten Ausführungsbeispielen sind die Leiterplatte 9 und die Batterie 8 in Reihe positioniert.

Die an die Gehäuseunterschale 3 angespritzte zweite Komponente bildet somit Montagehilfsmittel 13 sowie die Dichtung 4 des Lufteinlasses sowie eine zwischen den Gehäuseschalen umlaufende Dichtung 5. In der vollständig montierten Form gemäß Fig. 4a sind die Gehäuseunterschale 3 und die Gehäuseoberschale 7 formschlüssig miteinander verbunden.

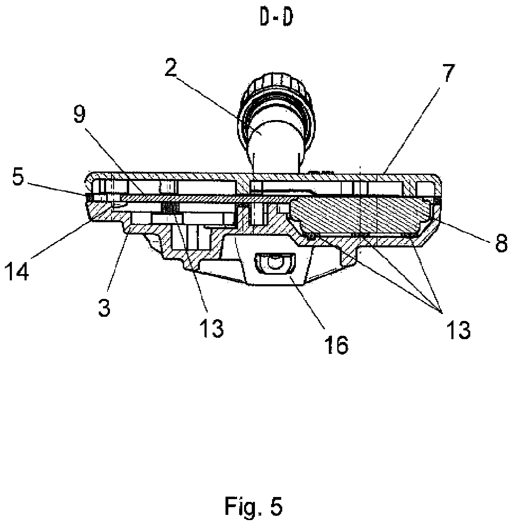

Der Schnitt D - D nach Fig. 4a ist in Fig. 5 dargestellt. Erkennbar ist die Anordnung der Leiterplatte 9 und der Batterie 8 in Reihe innerhalb des durch die Gehäuseunterschale 3 und die Gehäuseoberschale 7 gebildeten Gehäuses der Reifendrucküberwachungseinheit 1. Ferner sind in dem Schnitt D - D gemäß Fig. 5 erkennbar die Montage- und Auflagebereiche 13, welche durch die zweite Komponente der als Zweikomponentenkunststoffspritzgussteils ausgebildeten Gehäuseunterschale 3 gebildet sind. Weiter zeigt Fig. 5 den Montagebereich 16, welcher der Aufnahme der Schraubverbindung zur Montage des Ventils 2 an der Reifendrucküberwachungseinheit 1 dient zur Realisierung einer Gesamteinheit aus Reifendrucküberwachungseinheit 1 mit dem Ventil 2.

Die Gehäuseoberschale 7 weist angespritzte Stifte zur Aufnahme und Positionierung der Leiterplatte 9 auf. Wie in dem Schnitt D - D gemäß Fig. 5 erkennbar ist, werden nach dem Einsetzen der Leiterplatte 9 die an der Gehäuseoberschale 7 angeformten Stifte heißgeprägt, so dass diese eine die Leiterplatte 9 fixierende Hinterschneidung 14 ausbilden. Hierdurch ist die Leiterplatte 9 an der Gehäuseoberschale 7 gesichert und die Montage wird hierdurch erleichtert.

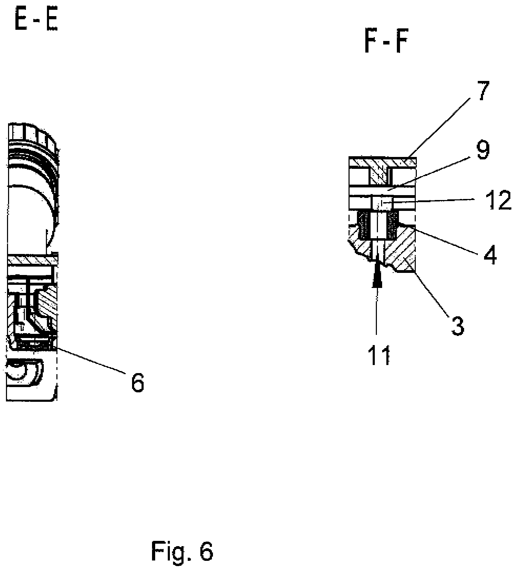

Die Schnitte E - E und F - F gemäß Fig. 4a sind in Fig. 6 dargestellt. Im Schnitt E - E ist die durch die zweite elastische Komponente gebildete Druckausgleichsmembran 6 erkennbar, deren Funktion und Wirkungsweise in Bezug auf das erste Ausführungsbeispiel erläutert wurde. Die Funktion der Druckausgleichsmembran 6 bei dem zweiten Ausführungsbeispiel ist identisch.

Der Schnitt F - F in Fig. 6 zeigt die Anordnung des Lufteinlasses 11, durch den der Drucksensor 12 mit dem Reifenfülldruck beaufschlagt wird. Ferner zeigt der Schnitt F - F die Dichtung 4 des Lufteinlasses 11, welche durch die zweite Komponente des Zweikomponentenspritzgussteils gebildet ist. Ferner ist in dem Schnitt F - F gemäß Fig. 6 die Anordnung der Leiterplatte 9, welche den Sensor 12 trägt, erkennbar.

Dem ersten und zweiten Ausführungsbeispiel gemäß den Fig. 1 - 6 ist gemeinsam, dass die Gehäuseunterschale 3 und die Gehäuseoberschale 7 mechanisch gefügt werden und hierzu ein umlaufender Dichtungsbereich 5 zwischen den Gehäuseschalen 3, 7 vorgesehen ist.

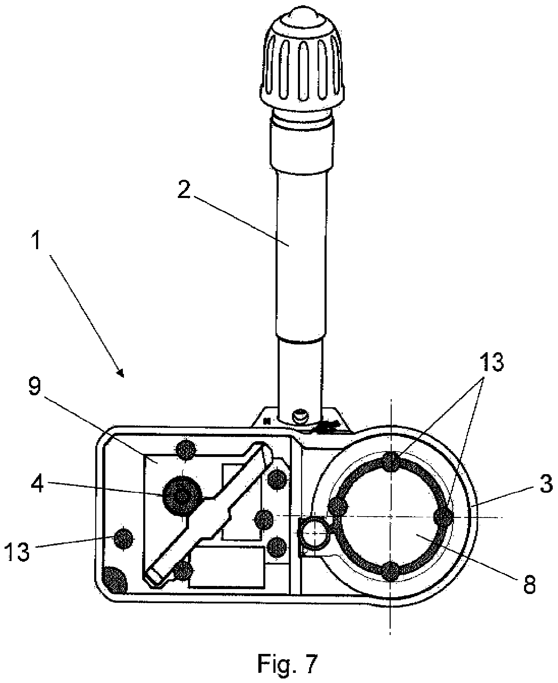

Hiervon abweichend zeigt Fig. 7 eine dritte Ausführungsform einer Reifendrucküberwachungseinheit 1, bei der wiederum die Batterie 8 und die Leiterplatte 9 in Reihe positioniert sind. Bei der Ausführungsform gemäß Fig. 7 werden die Gehäuseunterschale 3 und die Gehäuseoberschale 7 stoffschlüssig verbunden, sodass eine zwischen den Gehäuseschalen umlaufende Dichtung entfallen kann. In diesem Fall ist durch die zweite Komponente des als Zweikomponentenspritzgussteils ausgebildeten Gehäuses lediglich eine Dichtung 4 des Lufteinlasses gebildet, durch den der Drucksensor innerhalb des Gehäuses mit dem Reifenfülldruck beaufschlagt wird. Ferner sind durch die zweite elastische Komponente bei diesem Ausführungsbeispiel gemäß Fig. 7 Positionierstifte und Dämpfungsauflagen 13 zur Aufnahme der Batterie 8 und der Leiterplatte 9 gebildet. Durch diese elastischen Auflagen 13 wird insbesondere die Leiterplatte 9 vor Beschädigungen durch Vibrationen geschützt. Da das Gehäuse der Ausführungsvariante gemäß Fig. 7 durch eine stoffschlüssige Verbindung von Gehäuseunterschale 3 und Gehäuseoberschale 7 gebildet wird, kann ein umlaufender Dichtungsbereich zwischen den Gehäuseschalen entfallen.

## Patentansprüche

1. Reifendrucküberwachungseinheit (1) zur Anordnung innerhalb eines Kraftfahrzeugreifens zur Erfassung des Reifenfülldrucks, wobei die Reifendrucküberwachungseinheit (1) ein Gehäuse aufweist, in welchem Elektronikbauteile (8, 9) und zumindest ein Drucksensor (12) angeordnet sind, wobei das Gehäuse einen Lufteinlass (11) aufweist, über den Drucksensor (12) mit dem Reifenfülldruck beaufschlagt ist, **dadurch gekennzeichnet, dass** das Gehäuse als ein Mehrkomponentenkunststoffspritzgussteil, insbesondere als ein Zweikomponentenkunststoffspritzgussteil ausgebildet ist, wobei eine erste Komponente eine Gehäuseunterschale (3) und eine Gehäuseoberschale (7) bildet und wobei eine zweite Komponente eine Dichtung (4) zwischen dem Lufteinlass (11) und dem Drucksensor (12) bildet.

2. Reifendrucküberwachungseinheit (1) nach Anspruch 1, **dadurch gekennzeichnet, dass** die zweite Komponente eine Dichtung (5) des Gehäuses bildet

3. Reifendrucküberwachungseinheit (1) nach Anspruch 1 oder 2, **dadurch gekennzeichnet, dass** die zweite Komponente Auflagen (13) und/oder Montagebereiche für die Elektronikbauteile (8, 9) innerhalb des Gehäuses bildet.

4. Reifendrucküberwachungseinheit (1) nach Anspruch 1 oder 2, **dadurch gekennzeichnet, dass** die erste Komponente und/oder die zweite Komponente innerhalb des Gehäuses Positioniervorsprünge für die Elektronikbauteile (8, 9) bildet.

5. Reifendrucküberwachungseinheit (1) nach einem der vorherigen Ansprüche, **dadurch gekennzeichnet, dass** Elektronikbauteile (8, 9) formschlüssig und/oder kraftschlüssig in der Gehäuseunterschale (3) und/oder in der Gehäuseoberschale (7) einliegen.

6. Reifendrucküberwachungseinheit (1) nach einem der vorherigen Ansprüche, **dadurch gekennzeichnet, dass** Elektronikbauteile (8, 9) bei dem Zusammenbau des Gehäuses gegen elastische Auflagebereiche an dem Gehäusegegenstück gepresst werden, sodass die Elektronikbauteile (8, 9) bei montiertem Gehäuse unter Vorspannung der elastischen Auflagebereiche in dem Gehäuse fixiert sind.

7. Reifendrucküberwachungseinheit (1) nach einem der vorherigen Ansprüche, **dadurch gekennzeichnet, dass** zwischen Gehäuseunterschale (3) und den Elektronikbauteilen (8, 9) und/oder zwischen Gehäuseoberschale (7) und den Elektronikbauteilen (8, 9) eine oder mehrere Schaumstoffeinlage/n angeordnet ist/sind.

8. Reifendrucküberwachungseinheit (1) nach einem der vorherigen Ansprüche, **dadurch gekennzeichnet, dass** nach dem Einsetzen der Elektronikbauteile (8, 9) in die Gehäuseunterschale (3) und/oder Gehäuseoberschale (7) durch die erste oder die zweite Komponente gebildete Überstände (14) heißgeprägt werden und hierdurch die Elektronikbauteile (8, 9) in dem Gehäuse fixiert sind.

9. Reifendrucküberwachungseinheit (1) nach einem der vorherigen Ansprüche, **dadurch gekennzeichnet, dass** die Gehäuseoberschale (7) an der Gehäuseunterschale (3) in entsprechende Aufnahmen eingerastet und/oder verschraubt ist.

10. Reifendrucküberwachungseinheit (1) nach einem der vorherigen Ansprüche, **dadurch gekennzeichnet, dass** die Gehäuseoberschale (7) mit der Gehäuseunterschale (3) stoffschlüssig verbunden und/oder verklebt ist, insbesondere laserverschweißt und/oder ultraschallverschweißt ist.

11. Reifendrucküberwachungseinheit (1) nach einem der vorherigen Ansprüche, **dadurch gekennzeichnet, dass** durch die zweite Komponente innerhalb des Gehäuses eine Druckausgleichsmembran (6) gebildet ist.

12. Verfahren zur Herstellung einer Reifendrucküberwachungseinheit (1) zur Anordnung innerhalb eines Kraftfahrzeugreifens zur Erfassung des Reifenfülldrucks, die ein Gehäuse aufweist, in welchem Elektronikbauteile (8, 9) und zumindest ein Drucksensor (12) angeordnet sind, insbesondere nach einem der vorherigen Ansprüche, **dadurch gekennzeichnet, dass** das Gehäuse durch ein Mehrkomponentenkunststoffspritzgießen, insbesondere ein Zweikomponentenkunststoffspritzgießen hergestellt ist, wobei eine erste Komponente eine Gehäuseunterschale (3) und eine Gehäuseoberschale (7) bildet und eine zweite Komponente eine Dichtung (4, 5) und/oder Auflagebereiche (13) für die Elektronikbauteile (8, 9) innerhalb des Gehäuses bildet.

13. Verfahren nach Anspruch 12, **dadurch gekennzeichnet, dass** die zweite Komponente an die erste Komponente angespritzt wird.

14. Verfahren nach Anspruch 12 oder 13, **dadurch gekennzeichnet, dass** nach dem Einsetzen der Elektronikbauteile (8, 9) in die Gehäuseunterschale (3) und/oder Gehäuseoberschale (7) durch die erste oder die zweite Komponente gebildete Überstände (14) heißgeprägt werden und hierdurch die Elektronikbauteile (8, 9) in dem Gehäuse fixiert werden.

## Claims

1. Tyre pressure monitoring unit (1) to be disposed within a motor vehicle tyre for measuring the tyre inflation pressure, wherein the tyre pressure monitoring unit (1) has a housing, in which electronic parts (8, 9) and at least one pressure sensor (12) are arranged, wherein the housing has an air inlet (11), by means of which the tyre inflation pressure is applied to the pressure sensor (12), **characterised in that** the housing is designed as a multi-component plastic injection-moulded part, in particular as a two-component plastic injection-moulded part, wherein a first component forms a lower housing shell (3) and an upper housing shell (7) and wherein a second component forms a seal (4) between the air inlet (11) and the pressure sensor (12).

2. Tyre pressure monitoring unit (1) according to claim 1, **characterised in that** the second component forms a seal (5) of the housing.

3. Tyre pressure monitoring unit (1) according to claim 1 or 2, **characterised in that** the second component forms supports (13) and/or mounting areas for the electronic parts (8, 9) within the housing.

4. Tyre pressure monitoring unit (1) according to claim 1 or 2, **characterised in that** the first component and/or the second component forms positioning projections within the housing for the electronic parts (8, 9).

5. Tyre pressure monitoring unit (1) according to any of the preceding claims, **characterised in that** electronic parts (8, 9) are enclosed in a form-locking and/or force-locking manner in the lower housing shell (3) and/or in the upper housing shell (7).

6. Tyre pressure monitoring unit (1) according to any of the preceding claims, **characterised in that** electronic parts (8, 9) are pressed against elastic support regions on the housing counterpart during assembly of the housing, so that in the mounted housing the electronic parts (8, 9) are fixed in the housing under preload of the elastic support regions.

7. Tyre pressure monitoring unit (1) according to any of the preceding claims, **characterised in that** one or multiple foam insert(s) is/are arranged between the lower housing shell (3) and the electronic parts (8, 9) and/or between the upper housing shell (7) and the electronic parts (8, 9).

8. Tyre pressure monitoring unit (1) according to any of the preceding claims, **characterised in that** after the insertion of the electronic parts (8, 9) into the lower housing shell (3) and/or upper housing shell (7), projections (14) formed by the first or the second component are hot-stamped and the electronic parts (8, 9) are thereby fixed in the housing.

9. Tyre pressure monitoring unit (1) according to any of the preceding claims, **characterised in that** the upper housing shell (7) is latched and/or screwed to the lower housing shell (3) in corresponding receptacles.

10. Tyre pressure monitoring unit (1) according to any of the preceding claims, **characterised in that** the upper housing shell (7) is integrally bonded and/or adhered to the lower housing shell (3), in particular is laser-welded and/or ultrasound-welded.

11. Tyre pressure monitoring unit (1) according to any of the preceding claims, **characterised in that** a pressure equalising membrane (6) is formed by the second component within the housing.

12. A method for producing a tyre pressure monitoring unit (1) to be disposed within a motor vehicle tyre for sensing the tyre inflation pressure, having a housing in which electronic parts (8, 9) and at least one pressure sensor (12) are arranged, in particular according to any of the preceding claims, **characterised in that** the housing is produced by a multi-component plastic injection-moulding, in particular a two-component plastic injection-moulding, wherein a first component forms a lower housing shell (3) and an upper housing shell (7) and a second component forms a seal (4, 5) and/or support regions (13) for the electronic parts (8, 9) within the housing.

13. Method according to claim 12, **characterised in that** the second component is moulded onto the first component.

14. Method according to claim 12 or 13, **characterised in that** after the insertion of the electronic parts (8, 9) into the lower housing shell (3) and/or upper housing shell (7), projections (14) formed by the first or the second component are hot-stamped and the electronic parts (8, 9) are thereby fixed in the housing.

## Revendications

1. Unité de surveillance de la pression d'un pneumatique (1) à agencer à l'intérieur d'un pneumatique de véhicule automobile pour la détection de la pression de remplissage d'un pneumatique, dans laquelle l'unité de surveillance de la pression d'un pneumatique (1) présente un boîtier, dans lequel des composants électroniques (8, 9) et au moins un capteur de pression (12) sont agencés, dans laquelle le boîtier présente une entrée d'air (11), via laquelle le capteur de pression (12) est sollicité avec la pression de remplissage d'un pneumatique, **caractérisée en ce que** le boîtier est réalisé sous la forme d'une pièce moulée par injection de plastique à plusieurs composants, en particulier sous la forme d'une pièce moulée par injection de plastique à deux composants, dans laquelle un premier composant forme une coque inférieure de boîtier (3) et une coque supérieure de boîtier (7) et dans laquelle un deuxième composant forme un joint (4) entre l'entrée d'air (11) et le capteur de pression (12).

2. Unité de surveillance de la pression d'un pneumatique (1) selon la revendication 1, **caractérisée en ce que** le deuxième composant forme un joint (5) du boîtier.

3. Unité de surveillance de la pression d'un pneumatique (1) selon la revendication 1 ou 2, **caractérisée en ce que** le deuxième composant forme des couches (13) et/ou des zones de montage pour les composants électroniques (8, 9) à l'intérieur du boîtier.

4. Unité de surveillance de la pression d'un pneumatique (1) selon la revendication 1 ou 2, **caractérisée en ce que** le premier composant et/ou le deuxième composant forme des saillies de positionnement pour les composants électroniques (8, 9) à l'intérieur du boîtier.

5. Unité de surveillance de la pression d'un pneumatique (1) selon l'une quelconque des revendications précédentes, **caractérisée en ce que** des composants électroniques (8, 9) sont logés par correspondance de forme et/ou par force dans la coque inférieure de boîtier (3) et/ou dans la coque supérieure de boîtier (7).

6. Unité de surveillance de la pression d'un pneumatique (1) selon l'une quelconque des revendications précédentes, **caractérisée en ce que** des composants électroniques (8, 9) sont pressés lors de l'assemblage du boîtier contre des zones d'appui élastiques au niveau de la contre-pièce de boîtier de sorte que les composants électroniques (8, 9) soient fixés lorsque le boîtier est monté sous précontrainte des zones d'appui élastiques dans le boîtier.

7. Unité de surveillance de la pression d'un pneumatique (1) selon l'une quelconque des revendications précédentes, **caractérisée en ce qu'**une ou plusieurs couche(s) de mousse est/sont agencée(s) entre la coque inférieure de boîtier (3) et les composants électroniques (8, 9) et/ou entre la coque supérieure de boîtier (7) et les composants électroniques (8, 9).

8. Unité de surveillance de la pression d'un pneumatique (1) selon l'une quelconque des revendications précédentes, **caractérisée en ce qu'**après l'insertion des composants électroniques (8, 9) dans la coque inférieure de boîtier (3) et/ou la coque supérieure de boîtier (7), des parties saillantes (14) formées par le premier ou le deuxième composant sont estampées à chaud et les composants électroniques (8, 9) sont ainsi fixés dans le boîtier.

9. Unité de surveillance de la pression d'un pneumatique (1) selon l'une quelconque des revendications précédentes, **caractérisée en ce que** la coque supérieure de boîtier (7) s'enclenche et/ou est vissée dans des logements correspondants au niveau de la coque inférieure de boîtier (3).

10. Unité de surveillance de la pression d'un pneumatique (1) selon l'une quelconque des revendications précédentes, **caractérisée en ce que** la coque supérieure de boîtier (7) est reliée par correspondance de matière et/ou collée, en particulier soudée par laser et/ou soudée par ultrasons, à la coque inférieure de boîtier (3).

11. Unité de surveillance de la pression d'un pneumatique (1) selon l'une quelconque des revendications précédentes, **caractérisée en ce qu'**une membrane de compensation de pression (6) est formée à l'intérieur du boîtier par le deuxième composant.

12. Procédé de fabrication d'une unité de surveillance de la pression d'un pneumatique (1) à agencer à l'intérieur d'un pneumatique de véhicule automobile pour la détection de la pression de remplissage d'un pneumatique, qui présente un boîtier, dans lequel des composants électroniques (8, 9) et au moins un capteur de pression (12) sont agencés, en particulier selon l'une quelconque des revendications précédentes, **caractérisé en ce que** le boîtier est fabriqué par un moulage par injection de plastique à plusieurs composants, en particulier un moulage par injection de plastique à deux composants, dans lequel un premier composant forme une coque inférieure de boîtier (3) et une coque supérieure de boîtier (7) et un deuxième composant forme un joint (4, 5) et/ou des zones d'appui (13) pour les composants électroniques (8, 9) à l'intérieur du boîtier.

13. Procédé selon la revendication 12, **caractérisé en ce que** le deuxième composant est injecté sur le premier composant.

14. Procédé selon la revendication 12 ou 13, **caractérisé en ce qu'**après l'insertion des composants électroniques (8, 9) dans la coque inférieure de boîtier (3) et/ou la coque supérieure de boîtier (7), des parties saillantes (14) formées par le premier ou le deuxième composant sont estampées à chaud et les composants électroniques (8, 9) sont ainsi fixés dans le boîtier.
